(19) Europäisches Patentamt
European Patent Office
Office européen des brevets

(11) **EP 2 677 289 B1**

(12) **EUROPEAN PATENT SPECIFICATION**

(45) Date of publication and mention
of the grant of the patent:
**17.07.2019 Bulletin 2019/29**

(51) Int Cl.:
***G01J 1/18*** *(2006.01)*      ***B60S 1/08*** *(2006.01)*
***G01J 1/44*** *(2006.01)*

(21) Application number: **13002814.5**

(22) Date of filing: **31.05.2013**

(54) **State detecting device**

**Zustandsdetektionseinrichtung**

**Dispositif de détection d'état**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2012 JP 2012140321**

(43) Date of publication of application:
**25.12.2013 Bulletin 2013/52**

(73) Proprietor: **Valeo Japan Co., Ltd.
Saitama 360-0193 (JP)**

(72) Inventors:
• **OHATA, Tomoyuki**
**Tokyo, 143-8521 (JP)**
• **TOUJU, Masaaki**
**Tokyo, 143-8521 (JP)**

(74) Representative: **Oppermann, Frank
OANDO Oppermann & Oppermann LLP
Wilhelminenstrasse 1a
65193 Wiesbaden (DE)**

(56) References cited:
**EP-A1- 1 640 705     US-A1- 2002 126 015**

## Description

### Field of the Invention

The present invention relates to a state detecting device in which light emitted from a light-emitting element is received by a light-receiving element and a state of a detection target existing between the light-emitting element and the light-receiving element is detected based upon the received light signal.

### Description of the Related Art

An example of this kind of state detecting devices includes a vehicular raindrop detecting device in which light emitted from a light-emitting element is irradiated with a windshield, the reflected light is received by a light-receiving element, and a presence/absence state of raindrops on the windshield is detected based upon the received light signal. This device detects the presence/absence state of raindrops based upon a difference in the received light signal caused by the event that reflection of the light on the windshield surface changes depending on the presence/absence of raindrops on the windshield. In addition, a detection area of the windshield with which the light is irradiated is set to have a predetermined area from a viewpoint that the raindrop should certainly adhere to that area. However, on the other hand, as the detection area is the wider, a ratio of an area that the raindrop occupies relative to the detection area becomes smaller. Therefore there is a problem that even if the device is provided with an amplifying circuit for amplifying the received light signal, since the change (difference) in the received light signal becomes small, the detection of the raindrop becomes difficult.

For overcoming this problem, for example, Japanese Patent Laid-Open Publication No. 2004-286543 discloses a raindrop detecting device in which when a level of the received light signal is more than a predetermined value, an offset amplification is made to the received light signal to obtain a large output change thereof, and when the level of the received light signal is lowered, the offset amplification is reset. For realizing this method, this raindrop detecting device is provided with an offset power source and also two semiconductor switch elements for switching presence/absence of the offset amplification.

In the above-mentioned conventional device, however, there is left a problem that when the level of the received light signal is lowered, the output is low in itself and besides, the reset of the offset amplification is added, and therefore a significant change of an output voltage in the amplifying circuit can not be obtained. In addition, the conventional device has a problem that it is expensive since the offset power source is required and further, the expensive semiconductor switch element for the offset amplification switching is provided.

EP 1 640 705 A1 describes a signal detection circuit comprising a peak hold circuit 30 and an A/D converter of a microcomputer. The A/D converter converts the analog peak value of the received light signal in a digital value.

US 2002/0126015 A1 describes a raindrop detection apparatus comprising an amplifier circuit including a plurality of resistors and resistor selection switches. A control circuit performs a first adjustment to an output of the amplifier circuit to roughly adjusting the output to a target value, and a second adjustment to the output to closely adjust the output to the target value. The rough and fine adjustments are performed under the condition in which no raindrop is present on the windshield. For example, they are performed after the windshield is wiped out with wipers.

### SUMMARY OF THE INVENTION

Therefore the present invention is made in view of the foregoing problems, and an object of the present invention is to provide a state detecting device that has a wide dynamic range in which a change in a received light signal can be detected with accuracy regardless of a high or low level of the received light signal, making it possible to detect a state of a detection target with high accuracy.

The object of the invention is solved with the features of claim 1.

According to the aspect of the present invention, since the state of the detection target is determined by using the enlarged range peak value generated based upon the received light signal amplified by the range switching amplifying circuit, the change in the received light signal can be obtained with accuracy regardless of the high or low level of the receiving light signal, thereby detecting the state of the detection target with high accuracy.

### BRIEF DESCRIPTION OF THE DRAWINGS

Other objects, features, and advantages of the present invention will become more apparent from the following detailed description made with reference to the accompanying drawings, in which like parts are designated by like reference numbers and in which:

FIG. 1 is a block diagram showing the configuration of a state detecting device according to an embodiment in the present invention;

FIG. 2 is a structure conceptual diagram showing a sensor component in FIG. 1;

FIG. 3 is a diagram showing a specific circuit configuration example in a received light signal processing system in the embodiment;

FIGS. 4A to 4C are diagrams each showing an equivalent circuit of a range switching amplifying circuit in the embodiment;

FIG. 5 is a flow chart showing a flow of control by range switching in the embodiment;

FIGS. 6A to 6D are waveform graphs each showing a change of a signal state in a major part;

FIG. 7 is a diagram showing a first modification in the present invention; and

FIG. 8 is a diagram showing a second modification in the present invention.

## DESCRIPTION OF THE PREFERRED EMBODIMENTS

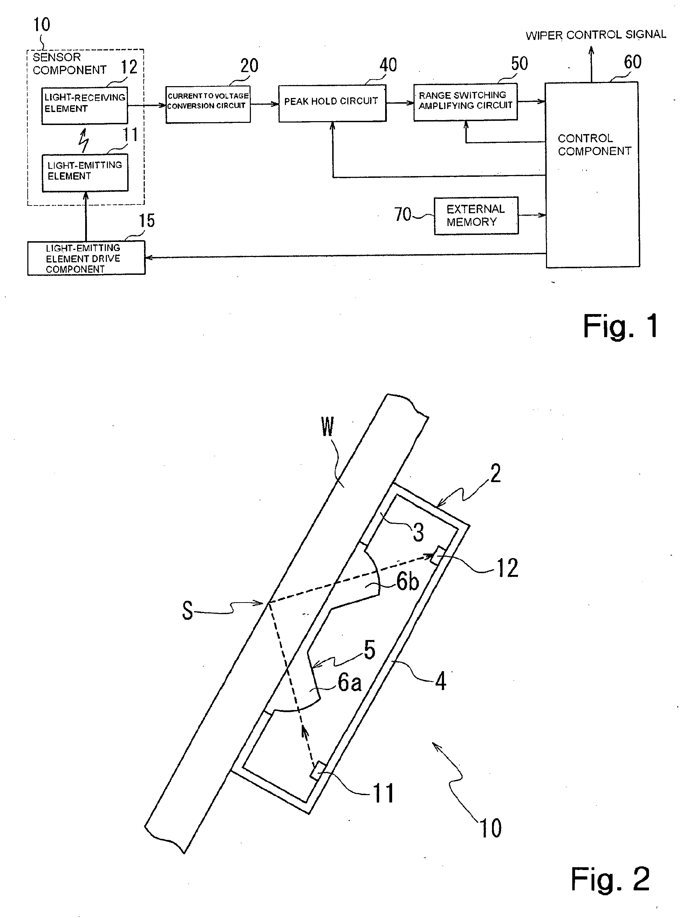

Hereinafter, a vehicular raindrop detecting device according to an embodiment in the present invention will be explained with reference to the accompanying drawings. FIG. 1 is a block diagram showing the configuration of the state detecting device according to the embodiment in the present invention. FIG. 2 is a conceptual diagram showing an arrangement configuration of a sensor component. First, the configuration of the sensor component 10 in the raindrop detecting device 1 will be explained with reference to FIG. 2. The sensor component 10 is formed as a unit of a casing having a front wall 3 and a rear wall 4 opposing with each other, and is mounted to an inner surface of a windshield W for a vehicle. That is, a prism 5 is provided in a window formed in the front wall 3, and a light- emitting element 11 and a light-receiving element 12 are installed in the rear wall 4. The light-emitting element 11 and the light-receiving element 12 are arranged such that each optical axis is directed toward a detection area (detection face) S of the windshield W, and light emitted from the light-emitting element 11 is reflected through the prism 5 on an outer side boundary surface of the detection area S in the windshield W, which is received in the light-receiving element 12. The prism 5 is provided with lens portions 6a and 6b on an optical path from the light-emitting element 11 to the light-receiving element 12. The sensor component 10 is mounted by tightly attaching the prism 5 on the inner surface of the windshield W by a transparent adhesive agent that is transparent in the light-emitting wavelength of the light-emitting element 11 and has a refractive index equivalent to a refractive index of the prism 5 or the windshield W, or the like.

Next, the configuration of an entire raindrop detecting device will be explained with reference to FIG. 1. The light-emitting element 11 is formed of, for example, a light-emitting diode (LED), and is connected to a light-emitting element drive component 15. The light-emitting element drive component 15 is connected to a control component 60 composed of a microcomputer. The light-emitting element drive unit 15 receives a signal from the control component 60 to drive the light-emitting element 11, thus outputting pulse light. The light-receiving element 12 is formed of, for example, a photo diode (PD), and is connected to a current to voltage conversion circuit 20, and a peak hold circuit 40 and a range switching amplifying circuit 50 are connected to the later stage of the current to voltage conversion circuit 20 in order, to connect an output side of the range switching amplifying circuit 50 to the control component 60

The peak hold circuit 40 holds a peak value of the received light signal. A peak hold release signal from the control component 60 to the peak hold circuit 50 is controlled to change from ON (release of peak hold) to OFF (hold of peal hold) at timing of a pulse light-emitting start in synchronization with timing of the pulse light-emitting of the light-emitting element 11. After a predetermined time elapses, the peal hold release signal is controlled to change from OFF (hold of the peak hold) to ON (release of the peak hold).

The range switching amplifying circuit 50 amplifies a peak value of the received light signal that is output from the peak hold circuit 40 in a plurality of amplification ranges. The control component 60 controls respective components in the raindrop detecting device 1, and takes in a voltage value amplified by the range switching amplifying circuit 50, which is combined with a predetermined offset voltage in accordance with the state. Raindrop information is generated based upon the result. The control component 60 is provided with an unillustrated RAM for temporarily storing the amplification result taken in from the range switching amplifying circuit 50, and an external memory 70 made of an involatile memory is connected to the control component 60.

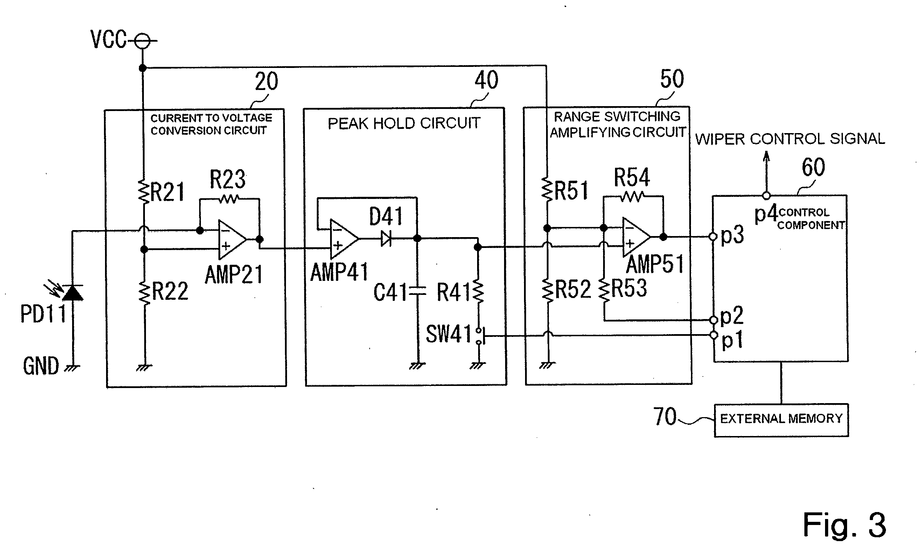

FIG. 3 is a diagram showing a specific circuit configuration in the received light signal processing system in the aforementioned raindrop detecting device 1.

The current to voltage conversion circuit 20 is provided with an operational amplifier AMP21, wherein a resistance R23 is connected between an output terminal and a reverse input terminal (-) of the operational amplifier AMP21. For example, a resistance R21 is connected between a power source voltage VCC of 5V and a non- reverse input terminal (+) of the operational amplifier AMP21, and a resistance R22 is connected between the non- reverse input terminal and the ground GND. A photo diode PD 11 as the light-receiving element 12 has an anode connected to the ground GND and a cathode connected to the reverse input terminal of the operational amplifier AMP21. When the light-receiving element 12 receives a light signal, light-receiving current flowing in a direction from the cathode to the anode is generated, which flows out from the anode to the ground GND.

Since the same current as the light-receiving current of the photo diode PD 11 flows from the output terminal of the operational amplifier AMP21 via the resistance R23, a received light (voltage) signal V0 that is output from the output terminal is expressed according to Equation (1).

$$V0 = r23 \times \text{light-receiving current} + Vref1 \quad (1)$$

However, r23 is a resistance value of the resistance R23, and Vref1 is a reference voltage and is a voltage-dividing value of the power source voltage VCC by the resistances R21 and R22.

The peak hold circuit 40 is provided with an operational amplifier AMP41, wherein the output voltage of the current to voltage conversion circuit 20 is input as a received light signal to a non-reverse input terminal of the operational amplifier AMP41. A diode D41 and a condenser C41 are serially provided in order between an output terminal of the operational amplifier AMP41 and the ground GND, and a connecting point between the diode D41 and the condenser C41 is connected to a reverse input terminal of the operational amplifier AMP41. Further, a resistance R41 and a switch element S41 are in series provided between the connecting point between the diode D41 and the condenser C41, and the ground GND.

The switch element S41 turns on at the time of receiving a peak hold release signal from a peak hold release signal control terminal p1 in the control component 60, discharging the condenser C41. The switch element S41 turns off at the time of receiving OFF of the peak hold release signal, so that the condenser C41 is charged until the input voltage of the peak hold circuit 40. That is, a peak value that is output from the peak hold circuit 40 is equal to V0, which becomes an input voltage Vin of the range switching amplifying circuit 50.

The range switching amplifying circuit 50 is provided with an operational amplifier AMP51, wherein an output voltage of the peak hold circuit 40 (terminal voltage of the condenser C41) is input as a received light signal to a non-reverse input terminal of the operational amplifier AMP51. A resistance R51 is connected between the power source voltage VCC and a reverse input terminal of the operational amplifier AMP51, and a resistance R52 is connected between the reverse input terminal and the ground GND. The reverse input terminal of the operational amplifier AMP51 is further connected to a control terminal p2 of the control component 60 via a resistance R53, and a resistance R54 is connected between the reverse input terminal and the output terminal. The output terminal of the operational amplifier AMP51 is connected to an A/D input terminal p3 of the control component 60.

Here, a gain of the range switching amplifying circuit 50 is determined by a combining resistance rm of the resistances R51, R52 and R53, and the resistance R54 (resistance value r54). That is, the gain is expressed according to Equation (2).

$$G = 1 + (r54/rm) \quad (2)$$

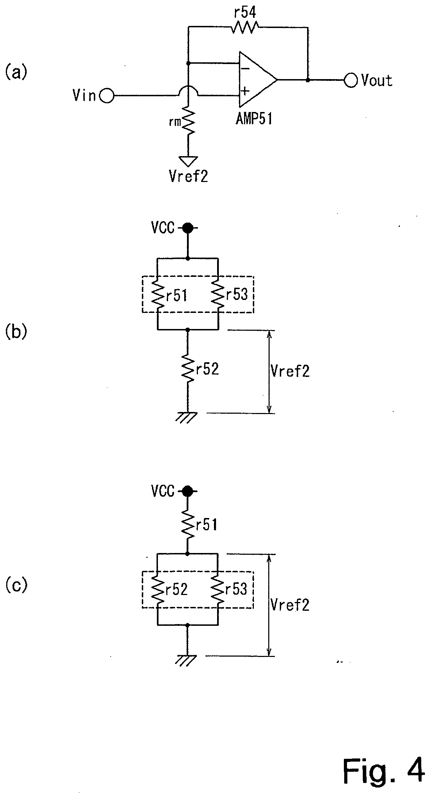

However, when respective resistance values of the resistances R51, R52 and R53 are indicated at r51, r52 and r53, rm = 1/((1/r51) + (1/r52) + (1/r53)). FIG. 4A shows an equivalent circuit of the range switching amplifying circuit 50, wherein a relation between input voltage Vin and output voltage Vout is expressed according to Equation (3).

$$Vout = G \times (Vin - Vref2) + Vref2 \quad (3)$$

However, the reference voltage Vref2 changes according to a level of the control terminal p2 to which the resistance R53 is connected.

FIG. 4B shows the reference voltage Vref2 when the control terminal p2 is in a Hi level, and FIG. 4C shows the reference voltage Vref2 when the control terminal p2 is in a Lo level. As a result, when the control terminal p2 is in the Hi level, a voltage-dividing value of the power source voltage VCC by a combined resistance of the resistances R51 and R53, and the resistance R52 is the reference voltage Vref2. When the control terminal p2 is in the Lo level, a voltage-dividing value of the power source voltage VCC by a combined resistance of the resistances R51, R52 and R53 is the reference voltage Vref2.

Here, there is shown an example in which the resistance r21 of the resistance R21 is 38.3K$\Omega$, the resistance r22 of the resistance R22 is 30K$\Omega$, the resistance r23 of the resistance R23 is 10K$\Omega$, the resistance r51 of the resistance R51 is 3.01K$\Omega$, the resistance r52 of the resistance R52 is 3.65K$\Omega$, the resistance r53 of the resistance R53 is 20K$\Omega$, and the resistance r54 of the resistance R54 is 10K$\Omega$, and the light-receiving current is 80$\mu$A.

The reference voltage Vref1 is equal to 2.196 (V), and the light-receiving voltage (V0) that is output by the current to voltage conversion circuit 20 is equal to 2.996 (V) according to Equation (1).

The gain G of the range switching amplifying circuit 50 is equal to 7.56 according to Equation (2). In addition, the reference voltage Vref2 is equal to 2.91 (V) when the control terminal p2 is in the Hi level, and is equal to 2.53 (V) when the control terminal p2 is in the Lo level. Therefore the range switching amplifying circuit 50 is in a Hi range amplifying mode where the reference voltage Vref2 is high when the control terminal p2 is in the Hi level, and is in a Lo range amplifying mode where the reference voltage Vref2 is low when the control terminal p2 is in the Lo level.

That is, according to Equation (3), in the Hi range amplifying mode, Vout (H) = 7.56 × (2.996 - 2.91) + 2.91 = 3.54 (V), and in the Lo range amplifying mode, Vout (L) = 7.56 × (2.996 - 2.53) + 2.53 = 6.04 (V). The gain is the same between Vout (H) and Vout (L), but the reference voltage Vref2 is different therebetween. As a result, an offset voltage Vos is generated as follows.

$$Vos = Vout\ (L) -\ Vout\ (H) = 6.04 -\ 3.54 = 2.5\ (V)\ \ (4)$$

Since the offset voltage Vos deviates from a calculation value because of accuracy variations in a resistance value of each resistance in the range switching amplifying circuit 50, a difference in an actually measured value between Vout (L) and Vout (H) is found at shipment of a commercial product (raindrop detecting device), which is in advance stored in the external memory 70.

The control component 60 causes the range switching amplifying circuit 50 to execute two modes of the Hi range amplification and the Lo range amplification by switching the level of the control terminal p2 to Hi and Lo for output. In addition, raindrop information is generated based upon a peak value of the received-light signal found by selecting an amplification result of any one of the two modes from the result of A/D conversion to each, thus determining a rainfall situation. Based upon this determination, a wiper control signal for controlling ON/OFF of a wiper or a wiper speed is sent from a wiper control signal output terminal p4 to an unillustrated wiper control device and the like. It should be noted that the control component 60 is provided with the other control terminal such as a terminal for sending a control signal to the light-emitting element drive component 15, which is omitted in illustration.

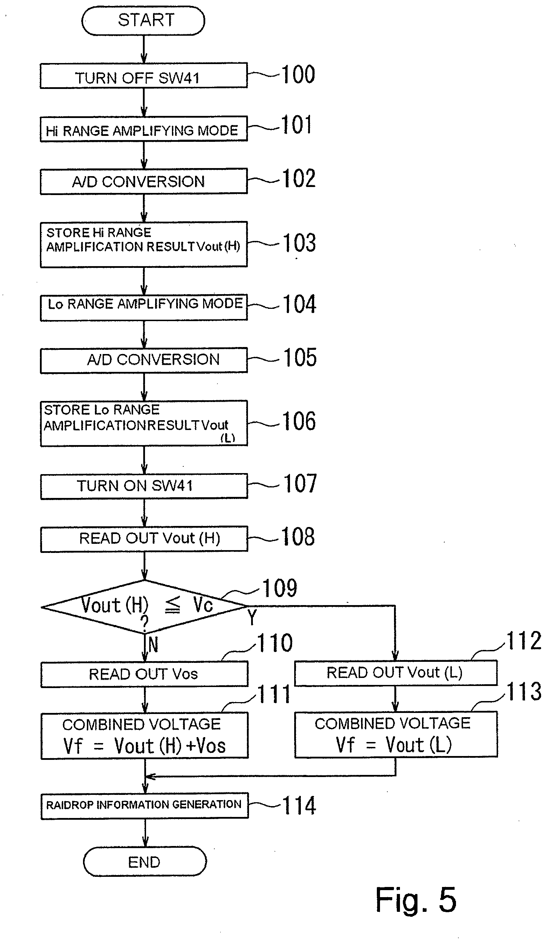

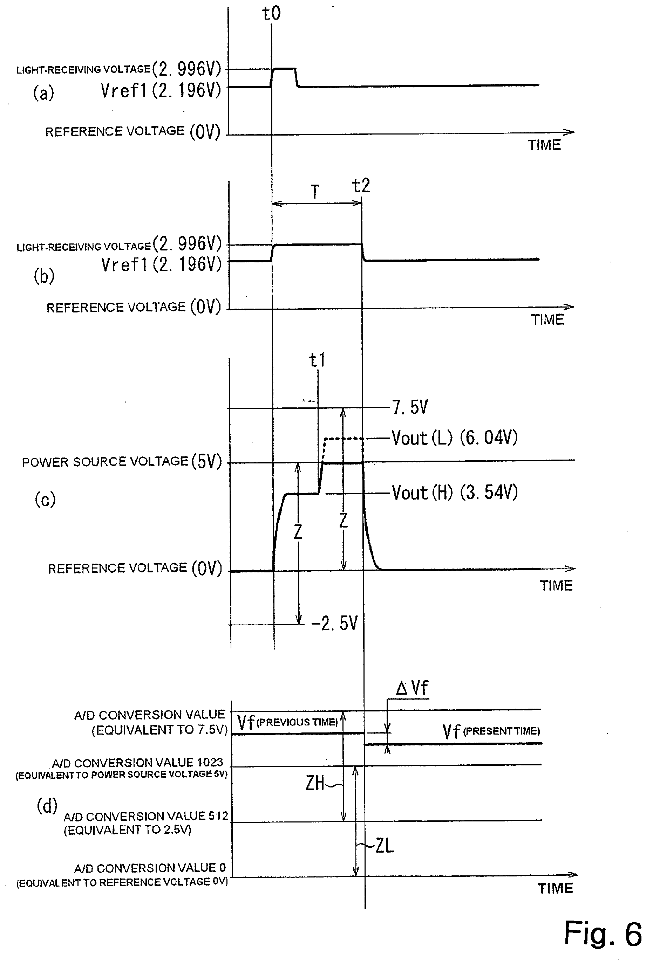

FIG. 5 is a flow chart showing a flow of the control by the range switching executed by the control component 60. FIGS. 6A to 6D are waveform diagrams each showing a change of a signal state in a major part. Here, the control component 60 drives the light-emitting element 11 by a constant time interval through the light-emitting element drive component 15 to output pulse light. In addition, the offset voltage Vos is stored in the external memory 70 as described before. FIGS. 6A to 6D show states continuing after a point of time of outputting one piece of pulse light at time t0, and the current to voltage conversion circuit 20, as shown in FIG. 6A, outputs a light-receiving voltage V0 formed by adding the reflective light-receiving component from the windshield W to the reference voltage Vref1.

First, at step 100 the control component 60 sends OFF of the peak hold release signal from the peak hold release signal control terminal p1 in synchronization with a drive command of the light-emitting element 11 (time t0) to turn off the switch element SW41 of the peak hold circuit, thus holding a peak value of the input voltage from the current to voltage conversion circuit 20. As shown in FIG. 6B, a continuing time T of OFF of the peak hold release signal is set to a predetermined time longer than a time width of the pulse light, and the output of the peak hold circuit is held to V0 during this time.

At step 101 the level of the control terminal p2 is set to Hi at time t0 to switch the range switching amplifying circuit 50 to be in the Hi range amplifying mode. Since the voltage is offset by Vos = 2.5 (V) in a low voltage direction in the Hi range amplifying mode, the maximum output of the range switching amplifying circuit 50 is, as shown in FIG. 6C, controlled to be below the power source voltage VCC equal to 5(V). In addition, at step 102 the output of the range switching amplifying circuit 50 is taken in the A/D input terminal p3 to be subject to A/D conversion, and at step 103 the Hi range amplification result Vout (H) having been A/D-converted is stored in the RAM of the control component 60. After that, at step 104 the level of the control terminal p2 is switched to Lo at time t1 to set the range switching amplifying circuit 50 to be in the Lo range amplifying mode.

In a case of the above-mentioned embodiment, in the Lo range amplifying mode, as shown in a broken line of FIG. 6C, Vout (L) is calculated to be equal to 6.04 (V), but the output of the range switching amplifying circuit 50 (operational amplifier AMP51) is regulated by the power source voltage VCC to be an output value of 5 (V). At step 105 the output of the range switching amplifying circuit 50 is taken in the A/D input terminal p3 to be subject to A/D conversion, and at step 106 the Lo range amplification result Vout (L) having been A/D-converted is stored in the above-mentioned RAM of the control component 60. It should be noted that the output data after the A/D conversion is a digital value, but hereinafter, the output data will be explained by a volt value corresponding to the digital value.

At step 107 ON of the peak hold release signal is sent from the peak hold release signal control terminal p1 at time t2 to turn on the switch element SW41 in the peak hold circuit, thus cancelling the peak value holding state of the input voltage from the current to voltage conversion circuit 20.

At step 108 the Hi range amplification result Vout (H) stored in the RAM is read out, and at step 109 it is checked whether or not the Hi range amplification result Vout (H) is below a predetermined lowered saturation threshold Vc. The operational amplifier AMP51 has the minimum voltage that can be output, and therefore when the output does not reach the minimum voltage because of the low input, the Hi range amplification result can not be used. For confirming this, the lowered saturation threshold Vc is set to a value found by adding a predetermined value determined in the operational amplifier AMP51 to a reference voltage (0V).

The process goes to step 110 when the Vout (H) is higher than Vc, wherein the offset voltage Vos is read out from the external memory 70, and at step 111 a combined voltage Vf is found according to Equation (5).

$$Vf = Vout\ (H) + Vos \qquad (5)$$

That is, the lowered saturation threshold Vc is set to be equal to 0 (V) for simplification, and when Vout (H) = 3.54 (V) as in the case of the example, the combined voltage is set as Vf = 3.54 + 2.5 = 6.04 (V). It should be noted that the offset voltage Vos read out from the external memory 70 is estimated to be in agreement with the calculation value 2.5 V in Equation (4). After that, the process goes to step 114.

On the other hand, when the Vout (H) is below Vc, the process goes from step 109 to step 112, wherein the Lo range amplification result Vout (L) stored in the RAM is read out, and at step 113 the Lo range amplification result Vout (L) is set as the combined voltage Vf. The process goes step 114. As described above, the combined voltage Vf is obtained based upon Vout (H) by the offset amplification when the Hi range amplification result Vout (H) is higher than the lowered saturation threshold Vc, and is obtained based upon Lo range amplification result Vout (L) when the Hi range amplification result Vout (H) is below the lowered saturation threshold Vc. Therefore regardless of the restriction of the power source voltage 5V, the peak value of the light-receiving voltage can be amplified in a wide dynamic range having a width of Z = 7.5 (V). It should be noted that ZH shown in FIG. 6D is a range of VF based upon Vout (H), and ZL shown in FIG. 6D is a range of Vf based upon Vout (L).

At step 114 the raindrop information is generated based upon the combined voltage Vf found at step 111 or step 113. Here, for example, as shown in FIG. 6D, when the combined voltage Vf (previous time) in the previous flow and the present combined voltage Vf (present time) are compared and a lowered amount ΔVf of the combined voltage is more than a predetermined value, it is determined that the voltage reduction is caused by adherence of the raindrop onto the windshield, generating the raindrop information that the raindrop exists on the windshield.

In the present embodiment, a functional part of executing the processes from step 108 to step 111 and step 113 in the flow chart of FIG. 5 in the control component 60 forms an enlarged range signal generating unit in the present invention, and a functional part of executing the process of step 114 forms a state determining unit. In addition, the combined voltage Vf corresponds to an enlarged range peak value. The resistance R51 corresponds to a first resistance, the resistance R52 corresponds to a second resistance, and the resistance R53 corresponds to a third resistance. The external memory 70 corresponds to an involatile memory.

The present embodiment is configured as described above, and provides the raindrop detecting device comprising the light-emitting element 11, and the light-receiving element 12 for receiving the reflected light of the pulse light emitted toward the windshield W from the light-emitting element 11, wherein presence/absence of raindrops on the windshield W is detected based upon the received light signal that is output from the light-receiving element 12, the device comprising the current to voltage conversion circuit 20 for converting the received light signal from current to voltage, the peak hold circuit 40 for peak-holding the received light signal passing through the current to voltage conversion circuit 20, the range switching amplifying circuit 50 for switching the output of the peak hold circuit 40 to the Hi range amplifying mode and the Lo range amplifying mode for amplification, and the control component 60. Further, in the control component 60, the combined voltage Vf is found based upon the received light signal amplified by the range switching amplifying circuit 50, and the presence/absence state of raindrops is determined based upon the combined voltage Vf. Therefore regardless of the high or low level of the received light signal, the wide dynamic range in which the change of the received light signal is accurately detected can be obtained, thus detecting the presence/absence state of the raindrop with accuracy.

Particularly the range switching amplifying circuit 50 includes the operational amplifier AMP51 that inputs the output of the peak hold circuit 40 to the non-reverse input terminal, wherein the resistance R51 connected to the power source voltage VCC and the resistance R52 connected to the ground GRD are serially arranged, the connecting point between the resistance R51 and the resistance R52 is connected to the reverse input terminal of the operational amplifier AMP51, one end of the resistance R53 is connected to the above-mentioned connecting point, and the other end of the resistance R53 is switched to the Hi level or the Lo level by the control component 60 to obtain the Hi range amplifying mode and the Lo range amplifying mode. Therefore the device can be realized at a low cost because of not requiring an exclusive offset power source, an expensive semiconductor switch element and the like

When the Hi range amplification result Vout (H) is higher than the lowered saturation threshold Vc, the offset voltage Vos is added to the Hi range amplification result Vout (H) to find the combined voltage Vf used for the raindrop information generation, and in regard to the offset voltage, the difference in the actually measured value of the output between the respective amplification ranges at shipment of the commercial product is stored in the external memory 70 (involatile memory). Therefore the combined voltage Vf can be obtained with high accuracy even if the accuracy variation in the resistance value between the respective resistances in the range switching amplifying circuit 50 exists. It should be noted that in the present embodiment, the involatile memory for storing the offset voltage Vos is connected to the control component 60 as the external memory 70, but may be incorporated in the control component 60.

In addition, in the present embodiment, at step 108 first, it is checked whether or not the Hi range amplification result Vout (H) is below the lowered saturation threshold Vc. When the Hi range amplification result Vout (H) is higher than the lowered saturation threshold Vc, the combined voltage Vf using the Vout (H) is adopted, but the Lo range amplification result Vout (L) may be checked before the Hi range amplification result Vout (H). In this case, when Vout (L) is lower than the possible maximum output value of the operational amplifier AMP51, for example, an increased saturation threshold close to 5V, there is a possibility that the Hi range amplification result that is offset in a low voltage direction is not output. Therefore Vout (L) is adopted as the combined voltage Vf.

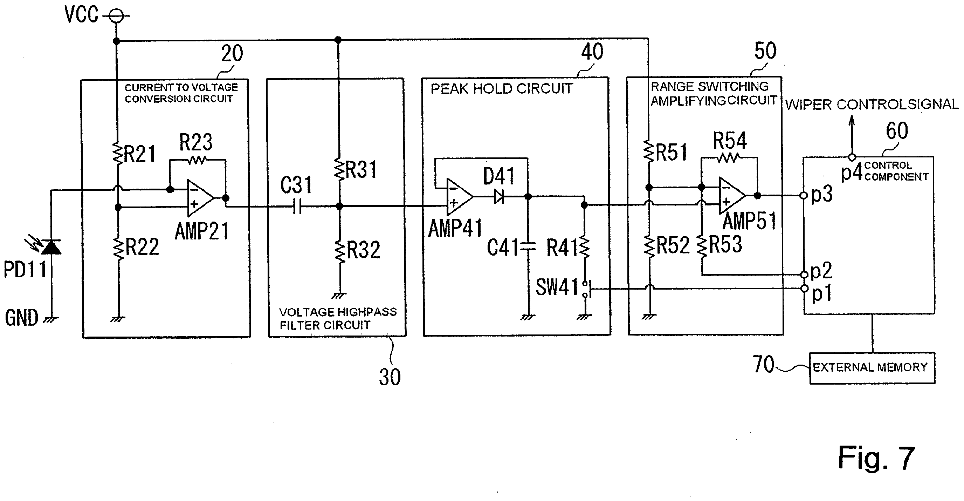

It should be noted that the light-receiving current that is output by the light-receiving element 12 includes pulse light components and external light components. The external light component is generated by the sun, street lamps, headlights of other vehicles and the like, and is in a low frequency region including a direct current, and particularly a large part thereof is occupied by direct-current components. For preventing this influence, as shown in FIG. 7 there may be provided a first modification in which a voltage highpass filter circuit 30 is provided between the current to voltage conversion circuit 20 and the peak hold circuit 40.

The voltage highpass filter circuit 30 comprises a condenser C31, a resistance R31 provided between the condenser C31 and the power source voltage VCC, and a resistance R32 provided between the condenser C31 and the ground GND. Here, a capacity Ca of the condenser C31 and a combined resistance value Ra of the resistances R31 and R32 are, for setting a cutoff frequency fc to a value allowing passage of alternate-current components by pulse light from the light-emitting element 11, selected in such a manner that fc = $1/(2\pi CaRa)$, which forms a primary highpass voltage filter. In a connecting point between the resistance R31 and the resistance R32, the output voltage (received light signal) that is offset to a high voltage side from the GND potential is obtained. A voltage dividing value of the power source voltage VCC by the resistances R31 and R32 becomes a reference voltage Vref1 of a received light signal that is input to the peak hold circuit 40. As a result, the external light component is removed from the output voltage (received light signal) in the current to voltage conversion circuit 20, thus preventing an erroneous detection in regard to the presence/absence state of raindrops due to the sun, street lamps, and headlights of other vehicles. It should be noted that the voltage highpass filter circuit 30 is shown as the primary highpass filter, but may be a secondary highpass filter, wherein the performance for attenuating the external light component as noises is further improved corresponding to an increasing order.

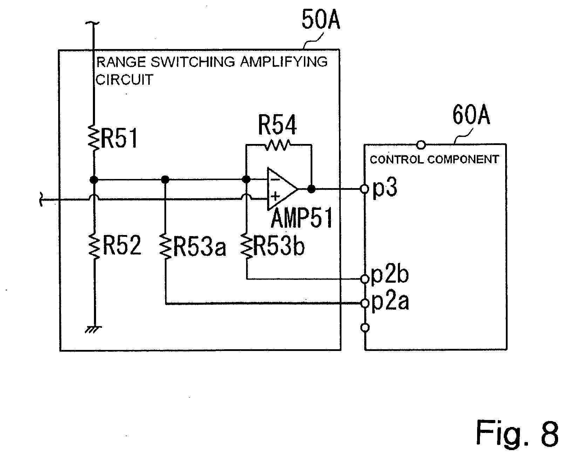

In addition, the present embodiment shows an example in which the resistance R53 (third resistance) in the range switching amplifying circuit 50 is configured only of the single resistance having a resistance value of 20KΩ, but the third resistance may be configured of a plurality of resistances. FIG. 8 shows a second modification in which a range switching amplifying circuit 50A is configured in such a manner that the third resistance is formed of two resistances. In the range switching amplifying circuit 50A, a resistance R53a and a resistance R53b as the third resistance are connected in parallel to the reverse input terminal of the operational amplifier AMP51, and the other ends of both the resistances R53a and R53b are respectively connected to control terminals p2a and p2b in a control component 60A. The other configuration is the same as that of the range switching amplifying circuit 50.

When values of the resistances in the range switching amplifying circuit 50A are set in such a manner that the resistance r51 of the resistance R51 is 3.01KΩ, the resistance r52 of the resistance R52 is 3.65KΩ, a resistance r53a of the resistance R53a is 40KΩ, a resistance r53b of the resistance R53b is 40KΩ, and the resistance r54 of the resistance R54 is 10KΩ, on a basis of the aforementioned example, in a state where the gain G remains in 7.56, the reference voltage Vref2 is 2.91 (V) and Vout (H) = 3.54 (V) when the control terminal p2a is in the Hi level and the control terminal p2b is in the Hi level, the reference voltage Vref2 is 2.72 (V) and Vout (M) = 4.79 (V) when the control terminal p2a is in the Hi level and the control terminal p2b is in the Lo level, and the reference voltage Vref2 is 2.53 (V) and Vout (L) = 6.04 (V) when the control terminal p2a is in the Lo level and the control terminal p2b is in the Lo level.

That is, each amplification result in three amplification ranges composed of the Hi range, the Mid range and the Lo range can be obtained. The offset voltage between the respective amplification ranges is 1.25V. The combined voltage Vf can be obtained by sequentially adding the offset voltage 1.25V between the respective outputs to the output Vout in each amplification range in the increasing order in the range switching amplifying circuit. When the third resistance is further configured of three or more resistances, more amplification ranges can further be obtained, and the amplification result with high accuracy can finely be obtained.

While only the selected embodiment has been chosen to illustrate the present invention, it will be apparent to those skilled in the art from this disclosure that various changes and modifications can be made therein without departing from the scope of the invention as defined in the appended claims. Furthermore, the foregoing description of the embodiment according to the present invention is provided for illustration only, and not for the purpose of limiting the invention as defined by the appended claims.

Description of Reference Signs

| | |
|---|---|
| 1 | RAINDROP DETECTING DEVICE |
| 2 | CASING |
| 3 | FRONT WALL |
| 4 | REAR WALL |
| 5 | PRISM |
| 6a, 6b | LENS PORTION |
| 10 | SENSOR COMPONENT |
| 11 | LIGHT-EMITTING ELEMENT |
| 12 | LIGHT-RECEIVING ELEMENT |
| 15 | LIGHT-EMITTING ELEMENT DRIVE COMPONENT |
| 20 | CURRENT TO VOLTAGE CONVERSION CIRCUIT |
| 30 | VOLTAGE HIGHPASS FILTER CIRCUIT |
| 40 | PEAK HOLD CIRCUIT |
| 50, 50A | RANGE SWITCHING AMPLIFYING CIRCUIT |
| 60, 60A | CONTROL COMPONENT |
| 70 | EXTERNAL MEMORY |
| AMP21, AMP41, AMP51 | OPERATIONAL AMPLIFIER |
| C41 | CONDENSER |
| D41 | DIODE |
| GND | GROUND |
| PD11 | PHOTO DIODE |
| p1 | PEAK HOLD RELEASE SIGNAL CONTROL TERMINAL |
| P2, p2a, p2b | CONTROL TERMINAL |
| p3 A/D | INPUT TERMINAL |
| p4 | WIPER CONTROL SIGNAL OUTPUT TERMINAL |
| R21, R22, R23, R41, R51, R52, R53, R54 | RESISTANCE |
| R53a, R53b | RESISTANCE |
| S41 | SWITCH ELEMENT |
| VCC | POWER SOURCE VOLTAGE |

**Claims**

1. A state detecting device comprising:

   a light-emitting element (11); and
   a light-receiving element (12) for receiving pulse light emitted from the light-emitting element, wherein a state of a detection target existing between the light-emitting element (11) and the light-receiving element (12) is detected based upon a received light signal (V0) that is output from the light-receiving element, the state detecting device comprising:

   a current to voltage conversion circuit (20) for converting the received light signal (V0) from current to voltage;
   a peak hold circuit (40) for peak-holding a peak value of the received light signal (V0) passing through the current to voltage conversion circuit (20);
   a range switching amplifying circuit (50, 50A) including an amplifier for switching the peak value output ef by the peak hold circuit (40) to at least two amplification ranges for amplification ((Vout(H)); (Vout(L)));
   an enlarged range signal generating unit (60) configured to generate as an enlarged range peak value

   the combined signal (Vf) which is the sum of a predetermined offset voltage (Vos) and the peak value (Vout(H)) of the one received light signal amplified by the range switching amplifying circuit (50, 50A) when the peak value (Vout(H)) of the one received light sig-nal amplified by the range switching amplifying circuit (50, 50A) is not saturated from a possible output range (Vc) of the amplifier, and the combined signal (Vf) which is the peak value (Vout(L)) of the other received light signal amplified by the range switching amplifying circuit (50, 50A) when the peak value of the one received light signal amplified by the range switching amplifying circuit (50, 50A) is saturated from a possible output range (Vc) of the amplifier; and

a state determining unit (60) configured to determine the state of the detection target based upon the enlarged range peak value (Vf).

2. A state detecting device according to claim 1, wherein
the range switching amplifying circuit (50, 50A) includes an operational amplifier (AMP51) that inputs the output of the peak hold circuit (40) to a non-reverse input terminal, wherein
a first resistance (R51) connected to a power source voltage and a second resistance (R52) connected to the ground are serially arranged,
a connecting point between the first resistance and the second resistance is connected to a reverse input terminal of the operational amplifier (AMP51),
one end of a third resistance (R53) is connected to the connecting point, and
the other end of the third resistance (R53) is switched to a Hi level or Lo level to obtain the plurality of the amplification ranges.

3. A state detecting device according to claim 2, wherein
a plurality of the third resistances (R53a, R53b) are provided, and
the range switching amplifying circuit (50, 50A) obtains three or more amplification ranges by a switching combination of the Hi level or Lo level of each other end in the third resistances.

4. A state detecting device according to claim 3, wherein
the enlarged range signal generating unit (60) sequentially adds an offset voltage between the respective outputs to the output in each of the amplification ranges in the increasing order in the range switching amplifying circuit (50, 50A) to generate the enlarged range peak value.

5. A state detecting device according to claim 4, wherein
a difference in an actually measured value of the output between the respective amplification ranges is stored in an involatile memory (70) as the offset output.

6. A state detecting device according to any of claims 1 to 5, wherein
the light-emitting element (11) emits the pulse light toward a detection face of a windshield surface in a vehicle,
the light-receiving element (12) is arranged in such a manner as to receive the light reflected on the detection face, and
the state determining unit (60) determines an adherence state of raindrops on the windshield based upon a peak value of the received light signal.

7. A state detecting device according to claim 6, wherein
a voltage highpass filter circuit (30) is provided between the current to voltage conversion circuit (20) and the peak hold circuit (40).

**Patentansprüche**

1. Eine Zustandsdetektionseinrichtung aufweisend:

ein Licht emittierendes Element (11); und
ein Licht empfangendes Element (12) zum Empfangen von Pulslicht, das von dem Licht emittierenden Element emittiert wird, wobei ein Zustand des Detektierens eines zwischen dem Licht emittierenden Element (11) und dem Licht empfangenden Element (12) existierenden Objektes auf der Grundlage eines empfangenden Lichtsignals (V0) detektiert wird, das von dem Licht empfangenden Element ausgegeben wird, wobei die Zustandsdetektionseinrichtung aufweist:

ein Strom in Spannung-Wandlerschaltkreis (20) zum Wandeln des empfangenden Lichtsignals (V0) von Strom in Spannung;
ein Höchstwert/Halteschaltkreis (40) zum Halten eines Höchstwertes des empfangenden Lichtsignals (V0), das den Spannung-Wandlerschaltkreis (20) passiert;

einen Bereichsumschaltung-Verstärkungsschaltkreis (50, 50A), der einen Verstärker zum Schalten des Höchstwertausgangs durch den Höchstwert/Halteschaltkreis (40) zu mindestens zwei unterschiedlichen Verstärkungsbereichen zur Verstärkung ((Vout(H); (Vout(L)) umfasst;

eine Signalerzeugungseinheit (60) mit einem erweiterten Bereich, die derart ausgebildet ist, dass

das kombinierte Signal (Vf), das die Summe von einer vorbestimmten Offsetspannung (Vos) und dem Höchstwert (Vout(H)) des einen empfangenden Lichtsignals, das von dem Bereichsumschaltung-Verstärkungsschaltkreis (50, 50A) verstärkt wurde, ist, wenn der Höchstwert (Vout(H)) des einen empfangenden Lichtsignals, das von dem Bereichsumschaltung-Verstärkungsschaltkreis (50, 50A) verstärkt wurde, nicht von einem möglichen Ausgangsbereich (Vc) des Verstärkers gesättigt ist, und

das kombinierte Signal (Vf), das der Höchstwert (Vout(L)) des anderen empfangenden Lichtsignals, das von dem Bereichsumschaltung-Verstärkungsschaltkreis (50, 50A) verstärkt wurde, ist, wenn der Höchstwert (Vout(H)) des einen empfangenden Lichtsignals, das von dem Bereichsumschaltung-Verstärkungsschaltkreis (50, 50A) verstärkt wurde, von einem möglichen Ausgangsbereich (Vc) des Verstärkers gesättigt ist; als ein Höchstwert mit einem erweiterten Bereich erzeugt wird; und

eine Zustandsbestimmungseinheit (60), die derart ausgebildet ist, dass der Zustand des Detektierungsobjektes auf der Grundlage des Höchstwertes mit dem erweiterten Bereich (Vf) bestimmt wird.

2. Eine Zustandsdetektionseinrichtung nach Anspruch 1, wobei der Bereichsumschaltung-Verstärkungsschaltkreis (50, 50A) einen Operationsverstärker (AMP51) umfasst, der den Ausgang des Höchstwert/Halteschaltkreises (40) an einen nicht-invertierenden Eingangsanschluss eingibt, wobei

ein erster Widerstand (R51), der mit einer Spannungsversorgungsquelle verbunden ist, und ein zweiter Widerstand (R52), der mit der Erde verbunden ist, in Reihe geschaltet sind,

ein Verbindungspunkt zwischen dem ersten Widerstand und dem zweiten Widerstand mit einem umgekehrten Eingangsanschluss des Operationsverstärkers (AMP51) verbunden ist,

ein Ende eines dritten Widerstands (R53) mit einem Verbindungspunkt verbunden ist, und

das andere Ende des dritten Widerstands (R53) auf einen hohen Pegel oder einen niedrigen Pegel geschaltet ist, um die Mehrzahl von Verstärkungsbereichen zu erhalten.

3. Eine Zustandsdetektionseinrichtung nach Anspruch 2, wobei eine Mehrzahl von den dritten Widerständen (R53a, R53b) vorgesehen sind, und der Bereichsumschaltung-Verstärkungsschaltkreis (50, 50A) drei oder mehr Verstärkungsbereiche durch eine Schaltkombination des niedrigen Pegels oder hohen Pegels von jedem anderen Ende in den dritten Widerständen erhält.

4. Eine Zustandsdetektionseinrichtung nach Anspruch 3, wobei die Signalerzeugungseinheit (60) mit einem erweiterten Bereich sequentiell eine Offsetspannung zwischen den jeweiligen Ausgängen zu dem Ausgang in jedem der Verstärkungsbereiche in aufsteigender Reihenfolge in dem Bereichsumschaltung-Verstärkungsschaltkreis (50, 50A) addiert, um einen Höchstwert mit einem erweiterten Bereich zu erzeugen.

5. Eine Zustandsdetektionseinrichtung nach Anspruch 4, wobei eine Differenz zwischen einem aktuell gemessenen Wert des Ausgangs zwischen den jeweiligen Verstärkungsbereichen in einem nicht flüchtigen Speicher (70) als der Offsetausgang gespeichert ist.

6. Eine Zustandsdetektionseinrichtung nach einem der Ansprüche 1 bis 5, wobei das Licht emittierende Element (11) das Pulslicht auf eine Detektionsfläche einer Windschutzscheibe in einem Fahrzeug emittiert,

das Licht empfangende Element (12) derart angeordnet ist, dass dieses das von der Detektionsfläche reflektierte Licht empfängt, und

die Zustandsbestimmungseinheit (60) einen Zustand des Anhaftens von Regentropfen an der Windschutzscheibe auf der Grundlage des empfangenden Lichtsignals bestimmt.

7. Eine Zustandsdetektionseinrichtung nach Anspruch 6, wobei ein Spannungs-Hochpassfilterschaltkreis (30) zwischen dem Strom in Spannung-Wandlerschaltkreis (20) und dem Höchstwert-Halteschaltkreis (40) vorgesehen ist.

**Revendications**

1. Dispositif de détection d'état comprenant :

un élément émetteur de lumière (11) ; et

un élément récepteur de lumière (12) pour recevoir une lumière pulsée émise par l'élément émetteur de lumière, dans lequel un état d'une cible de détection existant entre l'élément émetteur de lumière (11) et l'élément récepteur de lumière (12) est détecté sur la base d'un signal de lumière reçu (V0) qui est sorti par l'élément récepteur de lumière, le dispositif de détection d'état comprenant :

un circuit de conversion de courant en tension (20) pour convertir le signal de lumière reçu (V0) d'un courant en tension ;

un circuit de maintien de crête (40) pour maintenir une crête d'une valeur crête de signal de lumière reçu (V0) passant à travers le circuit de conversion de courant en tension (20) ;

un circuit d'amplification à commutation de plage (50, 50A) incluant un amplificateur pour commuter la valeur crête sortie par le circuit de maintien de crête (40) en au moins deux plages d'amplification à des fins d'amplification (Vout(H)) ; (Vout(L)) ;

une unité (60) de génération de signal de plage agrandie configurée pour générer en tant que valeur crête de plage agrandie le signal combiné (Vf) qui est la somme d'une tension de décalage prédéterminé (Vos) et de la valeur crête (Vout(H)) du signal de lumière reçu amplifié par le circuit d'amplification à commutation de plage (50, 50A) quand la valeur crête (Vout(H)) du signal de lumière reçu amplifié par le circuit d'amplification à commutation de plage (50, 50A) n'est pas saturée à partir d'une plage de sortie possible (Vc) de l'amplificateur, et le signal combiné (Vf) qui est la valeur crête (Vout(L)) de l'autre signal de lumière reçu amplifié par le circuit d'amplification à commutation de plage (50, 50A) quand la valeur crête de l'un signal de lumière reçu amplifié par le circuit d'amplification à commutation de plage (50, 50A) est saturée à partir d'une plage de sortie possible (Vc) de l'amplificateur ;

une unité (60) de détermination d'état configurée pour déterminer l'état de la cible de détection sur la base de la valeur crête de plage agrandie (Vf).

2. Dispositif de détection d'état selon la revendication 1, dans lequel

le circuit d'amplification à commutation de plage (50, 50A) inclut un amplificateur opérationnel (AMP51) qui entre la sortie du circuit de maintien de crête (40) dans une borne d'entrée non inversée, dans lequel

une première résistance (R51) connectée à une tension de source d'alimentation et une deuxième résistance (R52) connectée à la terre sont agencées en série,

un point de connexion entre la première résistance et la deuxième résistance est connecté à une borne d'entrée inversée de l'amplificateur opérationnel (AMP51),

l'une extrémité d'une troisième résistance (R53) est connectée au point de connexion, et l'autre extrémité de la troisième résistance (R53) est commutée en un niveau Hi ou un niveau Lo pour obtenir la pluralité de plages d'amplification.

3. Dispositif de détection d'état selon la revendication 2, dans lequel

une pluralité des troisièmes résistances (R53a, R53b) sont fournies, et

le circuit d'amplification à commutation de plage (50, 50A) obtient trois ou plus de trois plages d'amplification par une combinaison de commutation du niveau Hi ou du niveau Lo de chaque autre extrémité dans les troisièmes résistances.

4. Dispositif de détection d'état selon la revendication 3, dans lequel

l'unité (60) de génération de signal de plage agrandie ajoute séquentiellement une tension de décalage entre les sorties respectives à la sortie dans chacune des plages d'amplification dans l'ordre croissant dans le circuit d'amplification à commutation de plage (50, 50A) pour générer la valeur crête de plage agrandie.

5. Dispositif de détection d'état selon la revendication 4, dans lequel

une différence dans une valeur réellement mesurée de la sortie entre les plages d'amplification respectives est stockée dans une mémoire non volatile (70) en tant que sortie de décalage.

6. Dispositif de détection d'état selon l'une quelconque des revendications 1 à 5, dans lequel

l'élément émetteur de lumière (11) émet la lumière puisée vers une face de détection d'une surface de pare-brise dans un véhicule,

l'élément récepteur de lumière (12) est agencé de manière à recevoir la lumière réfléchie sur la face de détection, et

l'unité (60) de détermination d'état détermine un état d'adhérence de gouttes de pluie sur le pare-brise sur la base de la valeur crête du signal de lumière reçu.

**7.** Dispositif de détection d'état selon la revendication 6, dans lequel
un circuit filtrant passe-haut de tension (30) est fourni entre le circuit de conversion de courant en tension (20) et le circuit de maintien de crête (40).

10

SENSOR
COMPONENT  12

LIGHT-RECEIVING
ELEMENT

11

LIGHT-EMITTING
ELEMENT

15

LIGHT-EMITTING
ELEMENT DRIVE
COMPONENT

20

CURRENT TO VOLTAGE
CONVERSION CIRCUIT

40

PEAK HOLD CIRCUIT

50

RANGE SWITCHING
AMPLIFYING CIRCUIT

60

CONTROL
COMPONENT

WIPER CONTROL SIGNAL

70  EXTERNAL
MEMORY

## Fig. 1

W

2

3

12

6b

5

6a

4

S

11

10

## Fig. 2

Fig. 3

EP 2 677 289 B1

(a)

(b)

(c)

Fig. 4

START

TURN OFF SW41 — 100

Hi RANGE AMPLIFYING MODE — 101

A/D CONVERSION — 102

STORE Hi RANGE
AMPLIFICATION RESULT Vout (H) — 103

Lo RANGE AMPLIFYING MODE — 104

A/D CONVERSION — 105

STORE Lo RANGE
AMPLIFICATION RESULT Vout
(L) — 106

TURN ON SW41 — 107

READ OUT Vout (H) — 108

Vout (H) ≦ Vc
? — 109

N

Y

READ OUT Vos — 110

READ OUT Vout (L) — 112

COMBINED VOLTAGE
Vf = Vout (H) +Vos — 111

COMBINED VOLTAGE
Vf = Vout (L) — 113

RAIDROP INFORMATION GENERATION — 114

END

## Fig. 5

16

t0

LIGHT-RECEIVING VOLTAGE (2. 996V)
(a)      Vref1 (2. 196V)

REFERENCE VOLTAGE (0V)

TIME

T   t2

LIGHT-RECEIVING VOLTAGE (2. 996V)
             Vref1 (2. 196V)
(b)

REFERENCE VOLTAGE (0V)

TIME

t1

—7. 5V

—Vout (L) (6. 04V)

POWER SOURCE VOLTAGE (5V)

(c)                                          —Vout (H) (3. 54V)

Z      Z

REFERENCE VOLTAGE (0V)

TIME

—-2. 5V

ΔVf

A/D CONVERSION VALUE      Vf (PREVIOUS TIME)
(EQUIVALENT TO 7.5V)                                    Vf (PRESENT TIME)

A/D CONVERSION VALUE 1023
(EQUIVALENT TO POWER SOURCE VOLTAGE 5V)

(d)                                    ZH~
A/D CONVERSION VALUE 512
(EQUIVALENT TO 2.5V)

~ZL
A/D CONVERSION VALUE 0
(EQUIVALENT TO REFERENCE VOLTAGE 0V)
TIME

Fig. 6

Fig. 7

EP 2 677 289 B1

50A

RANGE SWITCHING AMPLIFYING CIRCUIT

60A

CONTROL COMPONENT

R51

R54

R52 R53a R53b

AMP51

p3

p2b

p2a

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004286543 A
- EP 1640705 A1
- US 20020126015 A1